# NEW EUROPEAN PATENT SPECIFICATION

(11) **EP 2 386 133 B2**
(45) Date of publication and mention of the opposition decision: **06.12.2017**
(45) Mention of the grant of the patent: 26.02.2014
(21) Application number: 08878993.8
(22) Date of filing: 19.12.2008
(51) Int. Cl.: H02G 3/22, F16L 5/02, F16L 5/08, F16L 5/10, F16L 5/14, H02G 15/013

(54) **LAYER FOR AN INSERT HALF, AND INSERT HALF**
SCHICHT FÜR EINE EINFÜGUNGSHÄLFTE UND EINFÜGUNGSHÄLFTE
COUCHE POUR UN DEMI-INSERT, ET DEMI-INSERT

(43) Date of publication of application: 16.11.2011
(73) Proprietor: MCT Brattberg AB, 371 92 Karlskrona (SE)
(72) Inventor: JOHANSSON, Bengt, S-371 92 Karlskrona (SE); BIRGERUD, Bo, S-23631 Höllviken (SE)
(74) Representative: Awapatent AB
(86) International application number: PCT/SE2008/051543
(87) International publication number: WO 2010/071530

(56) References cited:
- WO-A1-01/51834
- WO-A1-2008/140399
- DE-U1- 20 104 279
- US-A1- 4 648 607
- US-A1- 2004 103 600
- US-B1- 6 182 930

## Description

### TECHNICAL FIELD OF THE INVENTION

The present invention relates to a layer, for use in combination with an insert half, according to the preamble of claim 1, and an insert half comprising said layer.

### BACKGROUND OF THE INVENTION

Within many different technical fields, like fore example merchant ships, offshore platforms and buildings with content of high importance, the safety requirements in case of fire, explosions, leaking water etc are high. In case of fire, leaking water or the like, the fire and / or water are often spread along wires, cables or pipes within the ship, platform or building. In order to stop, or delay, the fire and/or water from spreading each cable, wire, or pipe must be sealed in a reliably manner where they are lead through partition walls within the ship, platform or building.

One commonly used solution for sealing the areas of a partition wall where cables, wires or pipes are passing includes the use of a rectangular frame installed in an opening in the partition wall. The frame is, depending on the expected loads on the frame and the required safety level, made of steel, aluminium or stainless steal, and secured in the partition wall either by screws, bolts or welding depending on the materials and dimensions of the wall. All cables, wires, or pipes that are passing through the partition wall are lead through the frame, and in order to seal the opening within the frame an insert block is placed around each cable, wire or pipe passing through the frame. The insert blocks consist of two block halves, each provided with a semicircular groove extending across one side of the block so that a circular opening is generated when the two block halves are put together with their respective groove facing each other.

In order to seal the frame, each of the cables, wires or pipe within the frame are fitted in an insert block and packed within the frame. The blocks are packed side by side in layers within the frame and the outside dimensions of the blocks are selected to fit a predetermined number of blocks within the frame. The layers are separated by a metallic plate that keeps the blocks in the intended position within the frame. The frame is filled almost completely by insert block layers before a pressure applying device is introduced in the top part of the frame. When all blocks, plates and the pressure applying device is in the correct position within the frame, the pressure applying device is activated and a pressure is applied on the blocks within the frame. The pressure makes the elastic blocks deform slightly and seal the remaining space within the frame. The rectangular cross section of the insert blocks makes it possible to provide a sealing around the substantially circular cross sections of the cables, wires or pipes which otherwise would be very difficult.

However, in order to provide a reliable sealing around each cable, wire or pipe, the radius of the groom must correspond almost exactly with the outside diameter of the cable, wire or pipe. To achieve this, a number of blocks with differently sized openings could be used, alternatively using an insert block of the type disclosed for example in EP 0 429 916 B1. This type of insert block has a circular opening provided with a number of thin layers fitted within the opening in the block. By removing one, or more, layers from the opening the radius of the opening could be adapted for a specific cable, wire or pipe. Another sealing arrangement of this type is disclosed in WO 2008/140 399.

The adaptable inset block does however suffer from one severe drawback since the fitting between the opening in the insert block and the outside surface of the cable, wire or pipe must be tight in order to ensure the desired level of sealing of the opening within the frame, and if not exactly the right number of layers are removed from the opening, the required sealing will not be achieved.

There is consequently a need for a flexible insert block that reduces the risk for improper sealing of the cables, wires or pipes that are lead through the frame.

### SUMMARY OF THE INVENTION

The present invention, defined in independent claim 1 and 5, provides a flexible insert half that reduces the problems described above.

This is achieved by removably arranging layers according to the present invention in an insert half. Each of the layers, for use in combination with an insert half to provide a sealing around a cable, wire or tube in a frame, has the shape of an elongated circular arc with a first end, and a second end, and is characterised in that it is provided with at least one indexing means arranged at the first and / or the second end of the layer.

The indexing means provide guidance to the operator about how many layers that should be removed in order to achieve the best sealing possible for a specific cable, wire or tube dimension. This is a huge advantage since the risk that the operator during the fitting of the insert halves around the cables, wires or tubes that needs to be sealed does not removes the correct numbers of layers in the insert half groove is reduced considerably. If to many, or few, layers are removed, the required sealing may not be reached which, in case of for example a fire or explosion could result in severe damage.

Another advantage with the present invention is that it also facilitates future inspections of the installation since the indexing means are visible after the insert halves are packed in the frame. This is a major advantage since this kind of safety installations are inspected on a regular basis in order to ensure the required safety level of the installation. The present invention will make these inspections more accurate, and reduce the time spent on these inspections.

In one preferred embodiment of the invention the layer is provided with indexing means at the first and second end. This embodiment facilitates the adaption of the insert half to a specific cable, wire or tube dimension since the indexing means easily could be recognized independently of which direction the insert half is viewed from.

In one preferred embodiment of the invention the indexing means extend from the end of the layer. By having indexing means extending from the end of the layer, the size of the indexing means could be increased, and consequently more easily detected by the operator performing the installation.

In one preferred embodiment of the invention, the indexing means extend in radial direction from the end the layer. This embodiment makes it possible to increase the size of the indexing means in radial direction without having the indexing means extending a distance outside the end surface of the insert half.

Furthermore the present invention relates to an insert half for use in combination with a similar insert half to provide a sealing around a cable, wire or tube in a frame. The insert half comprises:
- an insert body having at least a first substantially flat end surface, a second substantially flat end surface parallel to the first end surface and at least one substantially flat side surface extending between the first and second end surfaces;
- a semicircular groove in the side surface extending from the first end surface to the second end surface;
and is characterised in that a number of layers as described above are removably arranged in the semicircular groove in order to make it possible to change the radius of the groove.

This insert half provides a very flexible insert half that, when used in combination with a similar insert half, reduces the risk for improper sealing of the cables, wires or pipes that are lead through the frame since the insert block easily could be adapted for a number of different cable, wire or tube diameters and the indexing means on each of the layers removably arranged in the groove provides guidance about how many layers that must be removed in order to achieve the best sealing possible.

In one embodiment of the insert half the indexing means of different layers are positioned at different places around the periphery of the layers so that indexing means relating to different layers are positioned side by side around the periphery of the groove. This embodiment provides a favourable positioning of the indexing means since no indexing means will overlap each other, which facilitate the adaption of the insert half.

In one embodiment of the insert half, the insert half comprises eight layers. The width of the indexing means at the end of the removable layer is less then, or equal to, 1/8^{th} of the circumference of the layer. An insert half according to this embodiment provides the desired flexibility regarding adjustment range for the diameters of the groove, and ensures indexing means of sufficient size for being easy to detect without overlapping each other.

In one embodiment of the insert half the indexing means of different layers have different colours. This embodiment of the invention facilitates the distinguishing and selection of the different layers further.

In one embodiment of the insert half, the indexing means and the layer it belongs to have the same colour. By using different colours of the entire layers and indexing means the distinguishing and selection of the different layers are facilitated further.

In one embodiment of the insert half, each indexing means have different insignias visible, and possible to feel, at one, or both, end surfaces of the insert half. This embodiment makes it easier to distinguish the different layers from each other, and in case of complete lack of light, it is also possible for the operator performing the installation to feel the insignia relating to the different layers.

In one embodiment of the insert half the insert body has a substantially cuboidal, or half cylindrical, shape. These insert body shapes result in either a cuboidal, or cylindrical shape when they are used in combination with a similar insert body around a cable, wire or tube. The cuboidal shape is favourable when used in a rectangular frame since they easily could be packed within the frame, and the cylindrical shape is used in a circular frame.

### BRIEF DESCRIPTION OF THE DRAWINGS

One embodiment of the claimed invention is illustrated in the appended figures, in which:
- Figure 1: is a perspective view of an insert half with removably arranged layers in the groove.
- Figure 2: is a side view of the insert half in figure 1 disclosing the layers and the identification means.
- Figure 3: is a perspective view of a layer according to the present invention.

### DETAILED DESCRIPTION

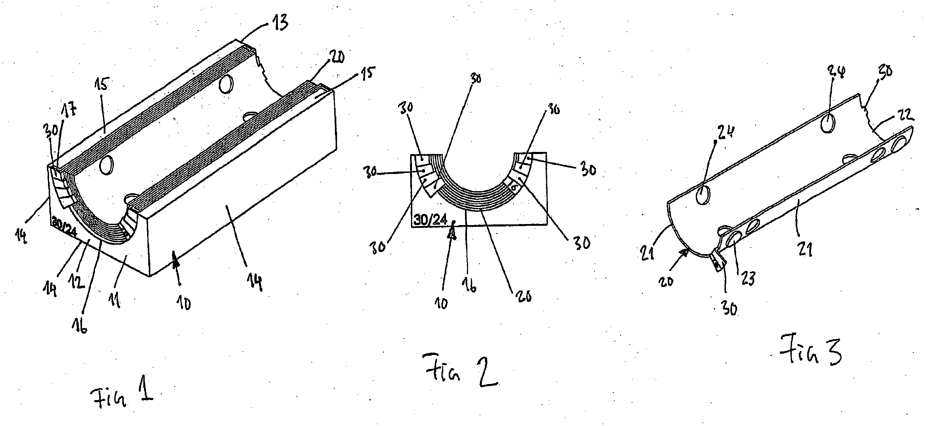

In figure 1, an insert half 10 according to one embodiment of the present invention is illustrated. The insert half has an insert body 11 with a substantially cuboidal shape. The insert body 11 comprises a first end surface 12, a second end surface 13, three external surfaces 14, and two surfaces 15 that will be in contact with similar surfaces on a second insert half when fitted around a cable, wire or tube, not illustrated. The two contact surfaces 15 extend from the first end surface 12 to the second end surfacel3 along opposite sides of a semicircular groove 16 placed in the centre of the insert half and extending from the first end surface 12 to the second end surface13.

The insert half 10 is intended for a cable, wire or tube that should be lead through a frame installed in a partition wall. The cable, wire or tube is placed in the groove 16 in one insert half 10 before a similar insert half is positioned opposite the first insert half 10 in such a way that the cable, wire or tube is enclosed in the grooves 16 in the two insert halves 10. The two insert halves, when fitted around a cable, wire or tube, are named an insert block. The insert block is packed together with other insert blocks in a frame installed in a partition wall.

In order to ensure the desired sealing around the cable, wire or tube, it is important that there is a tight fitting between the grooves 16 of the insert halves 10 and the outside surface of the cable, wire or tube passing through the insert block. The insert half 10 is provided with eight separate layers 20 that are removably arranged in the groove 16 in order to make it possible to adapt the radius of the groove 16 for a specific cable, wire or tube diameter.

The layers 20 are shaped like elongated circular arcs to fit in the groove 16 of the insert half 10. Each layer 20 has a specific predetermined radius to correspond within the adjacent layer 20, or the groove 16 in the insert half if the layer is place next to the groove 16. The radius of the layers is reduced towards the top layer to ensure the required tight fitting between the adjacent layers and the groove in the insert half.

In figure 3, a single layer 20 is illustrated. All the eight layers illustrated in figure 1 and 2 have substantially the same shape and comprises an elongated layer body 21 shaped like a circular arc, a first end 22 and second end 23.

The layer thickness is selected to meet the desired cable, wire or tube diameters that the insert half is intended to be used for. For example, if the desired diameter differences are 1 mm, each layer has a layer thickness of 0.5 mm, and if the desired diameter differences are 2 mm, the layer thickness is 1 mm. The illustrated insert half comprises eight different layers but the number of layers could be change to increase or decrease the adjustment range for the insert half, and the insert block.

Each layer is provided with indexing means 30 placed in both ends 22, 23 of the layer 20. The indexing means is extending in radial direction outwards from each end 22, 23 of the layer 20 and has the shape of a small tab with slightly increasing width towards the outer end of the indexing means. The size of the indexing means should be large enough to be easily detected by an operator performing the installation of the insert block in the frame, and in order to make it possible to print or form numerals, or symbols, indicating which specific diameter, or radius, of the cable, wire or tube the layer should be used for. In figure 2 is one of the indexing means marked with numeral 16 as an example of a possible insignia. Another alternative is to provide the different indexing means with different colours and let one colour correspond to a specific cable, wire or tube diameter, or radius. If different colours are used for distinguishing the layers, preferably the entire layer is made in the same colour as the indexing means to further facilitate the distinguishing of the different layers. These two alternatives could of course also be combined.

The indexing means 30 of the different layers are positioned at different places along the circumference of the layers so that they are positioned side by side around the periphery of the groove when arranged in the groove instead of overlapping each other.

In the illustrated embodiment of the invention, the end surfaces of the insert half 10 is provided with a cut out portion 17 around the groove 16. The layers 20, removably arranged in the groove 16, have the same length as the groove 16 and ends at edge between the groove 16 and the cut out portion 17 so that the indexing means 30, that are extending in radial direction, are positioned within the cut out portion 17, that has the same radial length as the radial length of the indexing means 30.

Each layer 20 is provided with circular protrusions 23 placed at different placed on the outside surface of the layer body 21, and circular recesses 24 in the inside surface of the layer body 21. Similar circular recesses are also provided in the groove 16 of the insert body 11 for removably arranging the layers 20 to the insert body 11. These protrusions 23 and recesses 24 are positioned at predetermined positions so that the circular protrusions 23 of one layer will generate press fittings together with the circular recesses 24 in the adjacent layer. These press fittings keeps the layers removably arranged in the groove 16 of the insert half 10.

While one presently preferred embodiment of the invention has been described herein, it is to be understood that the invention is not so limited but covers and includes any and all modifications and variations that are encompassed by the following claims.

## Claims

1. Layer (20) for use in combination with an insert half (10) to provide a sealing around a cable, wire or tube in a frame, said layer (20) having the shape of an elongated circular arc with a first end (21) and a second end (22), **characterised in that** the layer (20) is provided with at least one indexing means (30) arranged at the first (21) and / or the second end (22) of the layer (20), wherein the indexing means (30) and the layer (20) it belongs to have the same colour.

2. Layer according to claim 1, wherein the layer (20) is provided with indexing means (30) at the firs (21) and second end (22).

3. Layer according to claim 1 or 2, wherein the indexing means (30) extend from the end (21, 22) of the layer (20).

4. Layer according to claim 1, 2 or 3, wherein the indexing means (30) extend in radial direction from the end (21, 22) of the layer (20).

5. Insert half (10) for use in combination with a similar insert half to provide a sealing around a cable, wire or tube in a frame, said insert half (10) comprising:
- an insert body (11) having at least a first end surface (12), a second end surface (13) substantially parallel to the first end surface (12) and at least one side surface (15) extending between the first (12) and second (13) end surfaces;
- a semicircular groove (16) in the side (15) extending from the first end surface (12) to the second end surface (13);
**characterised in that** a number of layers (20) according to anyone of claim 1 to 4 are removably arranged in the semicircular groove (16) in order to make it possible to change the radius of the groove (16), wherein the indexing means (30) and the layer (20) it belongs to have the same colour.

6. Insert half according to claim 5, wherein the indexing means (30) of different layers (20) are positioned at different places around the periphery of the layers (20) so that indexing means (30) relating to different layers (20) are positioned side by side around the periphery of the groove (16).

7. Insert half according to claim 5 or 6, wherein the insert half (10) comprises eight layers (20), and the width of the indexing means (30) at the end of the removable layer (20) is less then, or equal to, 1/8th of the circumference of the layer (20).

8. Insert half according to claim 5, 6 or 7, wherein the indexing means (30) of different layers (20) have different colours.

9. Insert half according to anyone of claim 5-9, wherein each indexing means (30) have different insignias at one, or both, end surfaces (12, 13) of the insert half (10).

10. Insert half according to anyone of claim 5-10, wherein the insert body (11) has a substantially cuboidal, or half cylindrical, shape.

## Patentansprüche

1. Schicht (20) zur Verwendung in Kombination mit einer Einfügungshälfte (10) zum bereitstellen einer Abdichtung um ein Kabel, einen Draht oder ein Rohr herum in einem Rahmen, wobei die Schicht die Form eines länglichen Kreisbogens mit einem ersten Ende (21) und einem zweiten Ende (22) aufweist, **dadurch gekennzeichnet, dass** die Schicht (20) mit mindestens ein Rastmittel (30) versehen ist, welches an dem ersten (21) und/oder dem zweiten Ende (22) der Schicht (20) angeordnet ist, wobei das Rastmittel (30) und die dazugehörende Schicht (20) dieselbe Farbe haben.

2. Schicht nach Anspruch 1, wobei die Schicht (20) am ersten (21) und zweiten Ende (22) mit Rastmitteln (30) versehen ist.

3. Schicht nach Anspruch 1 oder 2, wobei sich die Rastmittel (30) von dem Ende (21, 22) der Schicht (20) aus erstrecken.

4. Schicht nach Anspruch 1, 2 oder 3, wobei sich die Rastmittel (30) in radialer Richtung von dem Ende (21, 22) der Schicht (20) aus erstrecken.

5. Einfügungshälfte (10) zur Verwendung in Kombination mit einer ähnlichen Einfügungshälfte zum Bereitstellen einer Abdichtung um ein Kabel, einen Draht oder ein Rohr herum in einem Rahmen, wobei die Einfügungshälfte (10) das Folgende aufweist:
- einen Einfügungskörper (11), welcher mindestens eine erste Endfläche (12), eine zu der ersten Endfläche (12) im Wesentlichen parallel verlaufende zweite Endfläche (13) und mindestens eine Seitenfläche (15) aufweist, die sich zwischen der ersten (12) und zweiten (13) Endfläche erstreckt;
- eine halbkreisförmige Auskehlung (16) in der Seite (15), die sich von der ersten Endfläche (12) zu der zweiten Endfläche (13) erstreckt;
**dadurch gekennzeichnet, dass** eine Anzahl von Schichten (20) nach einem der Ansprüche 1 bis 4 entfernbar in der halbkreisförmigen Auskehlung (16) angeordnet ist, um es möglich zu machen, den Radius der Auskehlung (16) zu verändern.

6. Einfügungshälfte nach Anspruch 5, wobei die Rastmittel (30) verschiedener Schichten (20) derart an verschiedenen Stellen um den Umfang der Schichten herum angeordnet sind, dass Rastmittel (30), welche zu verschiedenen Schichten (20) gehören, Seite an Seite um den Umfang der Auskehlung (16) herum angeordnet sind.

7. Einfügungshälfte nach Anspruch 5 oder 6, wobei die Einfügungshälfte (10) acht Schichten (20) aufweist und die Breite des Rastmittels (30) am Ende der entfernbaren Schicht (20) nicht mehr als ein Achtel des Umfangs der Schicht (20) beträgt.

8. Einfügungshälfte nach Anspruch 5, 6 oder 7, wobei die Rastmittel (30) verschiedener Schichten (20) verschiedene Farben aufweisen.

9. Einfügungshälfte nach einem der Ansprüche 5 bis 9, wobei alle Rastmittel (30) unterschiedliche Zeichen an einer oder beiden Endflächen (12, 13) der Einfügungshälfte (10) aufweisen.

10. Einfügungshälfte nach einem der Ansprüche 5 bis 10, wobei der Einfügungskörper (11) eine im Wesentlichen quaderförmige oder halbzylindrische Form aufweist.

## Revendications

1. Couche (20) pour une utilisation en association avec une moitié de plaquette (10), pour fournir une étanchéité joint autour d'un câble, d'un fil ou d'un tube dans un cadre , ladite couche (20) ayant la forme d'un arc circulaire allongé avec une première extrémité (21) et une seconde extrémité (22), **caractérisée en ce que** la couche (20) est munie d'au moins un moyen d'indexation (30) disposé sur la première (21) et/ou la seconde extrémité (22) de la couche (20), où les moyens d'indexation (30) et la couche (20) à laquelle il appartient ont la même couleur.

2. Couche selon la revendication 1, où la couche (20) est munie de moyens d'indexation (30) sur la première (21) et la seconde extrémité (22).

3. Couche selon la revendication 1 ou 2, où les moyens d'indexation (30) s'étendent depuis l'extrémité (21, 22) de la couche (20).

4. Couche selon la revendication 1,2 ou 3, où les moyens d'indexation (30) s'étendent dans le sens radial depuis l'extrémité (21, 22) de la couche (20).

5. Moitié de plaquette (10) pour une utilisation en association avec une moitié de plaquette semblable pour fournir une étanchéité autour d'un câble, d'un fil ou d'un tube dans un cadre, ladite moitié de plaquette (10) comprenant:
- un corps de plaquette (11) ayant au moins une première surface d'extrémité (12), une seconde surface d'extrémité (13) essentiellement parallèle à la première surface d'extrémité (12) et au moins une surface latérale (15) s'étendant entre la première (12) et la seconde (13) surfaces d'extrémité;
- une rainure semi-circulaire (16) sur le côté (15) s'étendant de la première surface d'extrémité (12) à la seconde surface d'extrémité (13);
**caractérisée en ce qu'**un certain nombre de couches (20) selon l'une quelconques des revendications 1 à 4 sont disposées de manière mobile dans la rainure semi-circulaire (16) afin de rendre possible la modification du rayon de la rainure (16), où les moyens d'indexation (30) et la couche 20 à laquelle ils appartiennent ont la même couleur.

6. Moitié de plaquette selon la revendication 5, où les moyens d'indexation (30) des différentes couches (20) sont positionnés à différents endroits autour de la périphérie des couches (20) de sorte que les moyens d'indexation (30) en rapport avec les différentes couches (20) soient positionnés côte à côte autour de la périphérie de la rainure (16).

7. Moitié de plaquette selon la revendication 5 ou 6, où la moitié d'indexation (10) comprend huit couches (20), et la largeur des moyens d'indexation (30) à l'extrémité de la couche amovible (20) est inférieure ou égale à 1/8ème de la circonférence de la couche (20).

8. Moitié de plaquette selon la revendication 5, 6 ou 7, où les moyens d'indexation (30) des différentes couches (20) ont des couleurs différentes.

9. Moitié de plaquette selon l'une quelconque des revendications 5-9, où les moyens d'indexation (30) ont différents insignes sur une, ou les deux, surfaces d'extrémité (12, 13) de la moitié de plaquette (10).

10. Moitié de plaquette selon l'une quelconque des revendications 5-10, où le corps de plaquette (11) a une forme cuboïde ou demi-cylindrique.
